# EUROPEAN PATENT SPECIFICATION

(11) **EP 3 667 234 B1**
(45) Date of publication and mention of the grant of the patent: **04.08.2021**
(21) Application number: 18212808.2
(22) Date of filing: 14.12.2018
(51) Int. Cl.: G01C 21/20, H04H 20/62, G01S 5/14, G01S 19/40, G01S 19/07, G01S 19/05, G01S 19/14, H04H 60/70, H04H 60/91

(54) **METHOD FOR OPERATING A NAVIGATION SYSTEM OF A VEHICLE IN A CELLULAR NETWORK**
VERFAHREN ZUM BETRIEB EINES NAVIGATIONSSYSTEMS EINES FAHRZEUGS IN EINEM ZELLULAREN NETZWERK
PROCÉDÉ DE FONCTIONNEMENT D'UN SYSTÈME DE NAVIGATION D'UN VÉHICULE DANS UN RÉSEAU CELLULAIRE

(43) Date of publication of application: 17.06.2020
(73) Proprietor: Valeo Comfort and Driving Assistance, 94046 Créteil Cedex (FR)
(72) Inventor: WELLENS, Matthias, 61381 Friedrichsdorf (DE)
(74) Representative: Delaval, Guillaume Laurent

(56) References cited:
- EP-A2- 1 005 627
- US-A1- 2017 163 362
- US-A1- 2018 306 929

## Description

### FIELD OF THE INVENTION

The present disclosure relates to a method for operating a navigation system of a vehicle in a cellular network wherein the navigation system comprises a navigation module and a mobile radio module.

### BACKGROUND OF THE INVENTION

For a more precise navigation a method is known for operating a navigation system of a vehicle in a cellular network comprising a navigation module and a mobile radio module, wherein the navigation system is provided with GNSS-correction data via the cellular network, wherein the GNSS-correction data are transmitted in a first subset of cellular cells of the cellular network according to a first routing method in a network slice as unencrypted data and wherein the GNSS-correction data are transmitted in a second subset of cellular cells of the cellular network according to a second routing method as encrypted data. A handover from a cellular cell belonging to the first subset to a cellular cell belonging to the second subset or a handover from a cellular cell belonging to the second subset to a cellular cell belonging to the first subset results in a delay with respect to the transmission of the GNSS-correction data since establishing an encrypted connection as well as establishing the usage of a network slice is a time consuming process. EP1005627-A2 discloses an in-vehicle navigation system that uses GPS satellite data in combination with GPS-correction data obtained via a cellular network to establish an accurate position of the vehicle.

### SUMMARY OF THE INVENTION

Since GNSS-correction data are time critical data it is an object of the present invention to provide an advanced method for operating a navigation system of a vehicle in a cellular network with a reduced probability for a temporary loss of accuracy during a handover from a cell of a cellular network operating according to a first routing method to a cell of a cellular network operating according to a second routing method or vice versa.

According to the present invention the navigation system of the vehicle has access to a database which contains information regarding the properties of the cellular cells of the cellular network, wherein the navigation system performs a comparison between a calculated travel route of the vehicle and the information regarding the properties of the cellular cells of the cellular network and wherein a connection to the cellular cell which follows next to the currently connected cellular cell on the travel route of the vehicle is established independently of any handover rules of the cellular network if the cellular cell which follows on the calculated travel route to the currently connected cellular cell belongs to another subset of the cellular cells than the currently connected cell the establishing of a connection of the navigation system to the following cellular cell is initiated by the position of the vehicle by entering a transition zone which is geographically defined. The advantage of this method is that the risk is minimized that there is a time interval during which the navigation system is without GNSS-correction data since a connection to the following cellular cell is established in advance on the basis of the travel route of the vehicle and knowledge of the features of a cellular cell that will follow on the travel route. For example the first subset comprises cellular cells using network slicing or using federated network slicing. Assuming all nodes belonging to the network slice of interest have the same right to access GNSS correction data, the correction data can be provided via unencrypted broadcast communication to all nodes in the network slice. The second subset comprises cellular cells not implementing the network slicing or federated network slicing feature. In the second subset, the access to the GNSS correction data has to be limited to an eligible group of users preventing the use of simple unencrypted broadcasting. Instead, encrypted unicasting is considered here. When moving from subset one to subset two the inventive method allows to setup the encrypted unicast connection timely and prevents an unwanted connection loss. The communication is independent of the communication range of specific cellular base stations but is managed on higher protocol layers.

It is advantageous when the database contains for each cellular cell of the cellular network at least one and preferably all of the following information:
- MNC [mobile network code] and/or MCC [mobile country code],
- data whether a network slicing or federated network slicing is available,
- data whether GNSS-correction data are encrypted available.
On the basis of such information the navigation system is able to decide whether on the travel route the next cellular cell makes in contrast to the present cellular cell decryption or network slicing necessary.

It is advantageous to define the transition zone and especially a borderline of the transition zone is defined by the navigation process on the basis of at least one parameter of the navigation process and especially on the basis of a calculated time presumably remaining until the connection to the currently connected cellular cell is lost. Such a definition of the transition zone or of the borderline will ensure that the connection to the following cell is fully established before the connection to the currently connected cell is lost.
It is also advantageous that the mobile radio module will use broadcast for receiving GNSS-correction data during travelling in the first subset which comprises cellular cells using network slicing or using federated network slices and that the mobile radio module will use unicast for receiving GNSS-correction data during travelling in the second subset which comprises cellular cells using broadcast and encryption. Such a subdivision makes it easy to qualify the available cellular cells. Thus the availability of GNSS-correction data is possible independently from the availability of network slicing since the mobile radio module is able choose the routing method which is suitable for the type of the actual cellular cell.

### BRIEF DESCRIPTION OF THE DRAWINGS

The foregoing and other features and advantages of the present invention will become apparent to those skilled in the art to which the present invention relates upon reading the following description with reference to the accompanying drawing, in which:

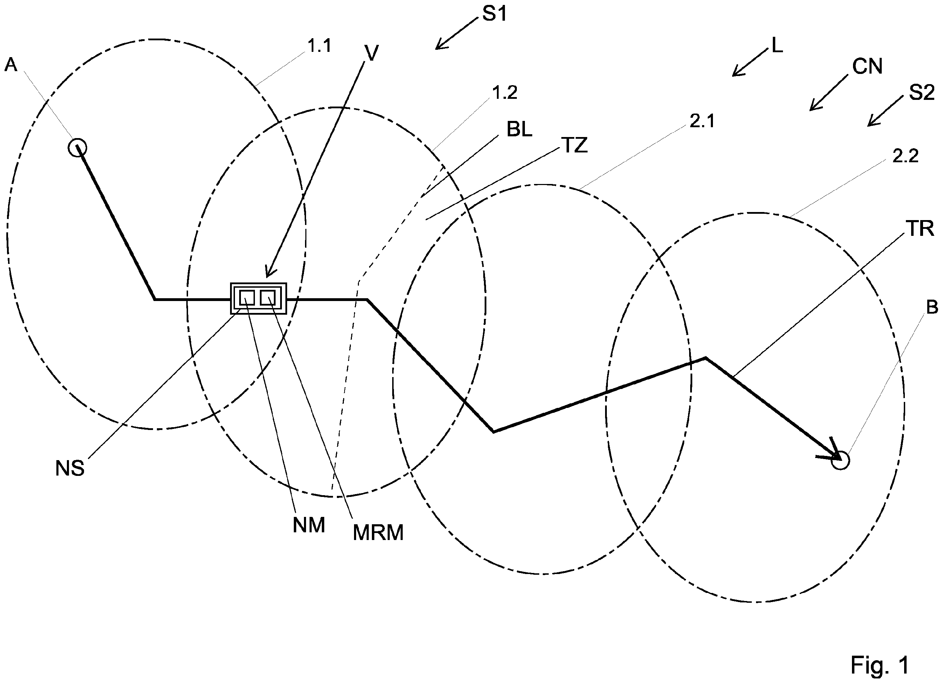

- Figure 1: shows a schematic view of a detail of a cellular network.

### DETAILED DESCRIPTION OF THE INVENTION

Figure 1 shows a schematic view of a detail of a cellular network CN. The cellular network CN shows a first subset S1 of cellular cells 1.1, 1.2 of the cellular network CN which are operated according to a first routing method and a second subset S2 of cellular cells 2.1, 2.2 of the cellular network CN which are operated according to a second routing method. The schematic view shows a landscape L which is covered by the cellular network CN and a travel route TR of a vehicle V which is travelling on the travel route TR from point A to point B. The travel route TR is covered by the cells 1.1 and 1.2 of the first subset S1 and by cellular cells 2.1 and 2.2 of the second subset S2. The vehicle V houses a navigation system NS which comprises a navigation module NM and a mobile radio module MRM. The navigation system NS uses GNSS-Data from satellites which are received by the navigation module NM and GNSS-correction data of ground stations which are spread by the cellular network CN which are received by the mobile radio module MRM. Additionally the navigation system NS has access to a database via the mobile radio module MRM over the cellular network CN. This database contains information about the cellular cells 1.1, 2.1, 2.1, 2.2 of the cellular network CN. These data are related to the landscape in a way that the navigation system NS is able to calculate which cellular cell 1.1, 2.1, 2.1, 2.2 will be entered next while travelling on the travel route TR from point A to point B.

For the case that the travel route TR passes through cellular cells 1.1, 1.2, 2.1, 2.2 of the first subset S1 and of the second subset S2 the navigation systems NS uses predefined borderlines of a transition zone or calculates borderlines BL of a transition zone TZ. Each borderlines BL serves as a trigger which causes the navigation system NS to establish a connection to a following cellular cell 2.1 in order to have more time available for establishing the connection than a handover process which is initiated by the cellular network CN or by the mobile radio module MRM would allow.
Thus it is possible that in the case that a decryption process which is necessary for the reception of the GNSS-correction data within the second subset S2 of cellular cells 2.1, 2.2 is completely established before the connection to the actual cellular cell 1.2 is lost.

When considering the scenario to move from subset S1 offering network slicing to the second subset S2 without network slicing and requiring a unicast connection secured via encryption, the second connection may still be initiated while communicating with cellular cells belonging to subset S1 ensuring that the connection is setup and working upon leaving the service area of the network slice. For the short time span while still being served by subset S1 and not receiving signals from subset S2 the MRM will receive correction data via the unencrypted broadcast in the network slice as well as via the encrypted unicast connection both via the cellular infrastructure of subset S1. After the transition to subset S2 the MRM will only receive the encrypted unicast connection that has been handed over from S1 to S2 but will not receive the broadcast anymore because it will not be available in S2 due to lack of (federated) network slicing support.

When considering the other scenario to move from subset S2 to subset S1 the second connection shall be established as soon as S1 signals can be successfully received. Since the subset S2 uses broadcasting as routing method no connection needs to be established but the MRM still needs to search for the connection and synchronize to the GNSS correction data delivery process justifying the earlier start when also still receiving signals from subset S2.

This means that the navigation system NS is able to receive GNSS-correction data via the cellular network CN without an interruption which may be due to the need for additional time for the preparation of a decryption process.

### REFERENCE NUMERALS:

- CN: cellular network
- S1: first subset of cellular cells
- S2: second subset of cellular cells
- 1.1, 1.2: cellular cell of S1
- 2.1, 2.2: cellular cell of S2
- TR: travel route
- A: point on TR
- B: point on TR
- V: vehicle
- NS: navigation system
- NM: navigation module
- MRM: mobile radio module
- BL: borderline
- TZ: transition zone

## Claims

1. Method for operating a navigation system (NS) of a vehicle (V) in a cellular network (CN) wherein the navigation system (NS) comprises a navigation module (NM) adapted to receive GNSS-Data from satellites and a mobile radio module (MRM) adapted to receive GNSS-correction data from ground stations in a cellular network,
- wherein the navigation system (NS) is provided with GNSS-correction data via the cellular network (CN),
- wherein the GNSS-correction data are transmitted in a first subset (S1) of cellular cells (1.1, 1.2) of the cellular network (CN) according to a first routing method in a network slice as unencrypted data using broadcast and wherein the GNSS-correction data are transmitted in a second subset (S2) of cellular cells (2.1, 2.2) of the cellular network (CN) according to a second routing method as encrypted data using unicast,
**characterized in**
- **that** the navigation system (NS) of the vehicle (V) has access to a database which contains information regarding the properties of the cellular cells (1.1, 1.2, 2.1, 2.2) of the cellular network (CN), said information being related to a landscape in a way that the navigation system (NS) is able to calculate which cellular cell (1.1, 2.1, 2.1, 2.2) will be entered next while travelling on a given travel route (TR);
- wherein the navigation system (NS) performs a comparison between a calculated travel route (TR) of the vehicle (V) and the information regarding the properties of the cellular cells (1.1, 1.2, 2.1, 2.2) of the cellular network (CN) and
- wherein a connection to the cellular cell (2.1) which follows next to the currently connected cellular cell (1.2) on the travel route (TR) of the vehicle (V) is established independently of any handover rules of the cellular network (CN) if the cellular cell (2.1) which follows on the calculated travel route (TR) to the currently connected cellular cell (1.2) belongs to another subset (S2) of the cellular cells (1.1, 1.2, 2.1, 2.2) than the currently connected cell (1.2) then the establishment of the connection of the navigation system (NS) to the following cellular cell (2.1) is being initiated when the vehicle by enters a transition zone (TR) which is geographically defined.

2. Method according to claim 1 **characterized in that** the database contains for each cellular cell (1.1, 1.2, 2.1, 2.2) of the cellular network (CN) as information
- a MNC [mobile network code] or a MCC [mobile country code] and,
- data whether a network slicing or federated network slicing is available and
- data whether GNSS-correction data are encrypted available.

3. Method according to claim 1 **characterized in that** the transition zone (TR) and a borderline (BR) of the transition zone (TR) is defined by the navigation process on the basis of at least one parameter of the navigation process and on the basis of a calculated time presumably remaining until the connection to the currently connected cellular cell (1.2) is lost.

## Patentansprüche

1. Verfahren zum Betreiben eines Navigationssystems (NS) eines Fahrzeugs (V) in einem Mobilfunknetz (CN), wobei das Navigationssystem (NS) ein Navigationsmodul (NM), das zum Empfangen von GNSS-Daten von Satelliten eingerichtet ist, und ein Mobilfunkmodul (MRM), das zum Empfangen von GNSS-Korrekturdaten von Erdfunkstellen in einem Mobilfunknetz eingerichtet ist, umfasst,
- wobei das Navigationssystem (NS) über das Mobilfunknetz (CN) mit GNSS-Korrekturdaten versorgt wird,
- wobei die GNSS-Korrekturdaten in einer ersten Teilmenge (S1) von Mobilfunkzellen (1.1, 1.2) des Mobilfunknetzes (CN) gemäß einem ersten Routing-Verfahren in einem Netz-Slice als unverschlüsselte Daten unter Verwendung von Broadcast übertragen werden und wobei die GNSS-Korrekturdaten in einer zweiten Teilmenge (S2) von Mobilfunkzellen (2.1, 2.2) des Mobilfunknetzes (CN) gemäß einem zweiten Routing-Verfahren als verschlüsselte Daten unter Verwendung von Unicast übertragen werden,
**dadurch gekennzeichnet,**
- **dass** das Navigationssystem (NS) des Fahrzeugs (V) Zugriff auf eine Datenbank hat, die Informationen bezüglich der Eigenschaften der Mobilfunkzellen (1.1, 1.2, 2.1, 2.2) des Mobilfunknetzes (CN) enthält, wobei die Informationen auf eine solche Weise mit einer Landschaft in Zusammenhang stehen, dass das Navigationssystem (NS) berechnen kann, in welche Mobilfunkzelle (1.1, 1.2, 2.1, 2.2) während eines Fortbewegens auf einer gegebenen Fortbewegungsroute (TR) als Nächstes eingetreten wird;
- wobei das Navigationssystem (NS) einen Vergleich zwischen einer berechneten Fortbewegungsroute (TR) des Fahrzeugs (V) und den Informationen bezüglich der Eigenschaften der Mobilfunkzellen (1.1, 1.2, 2.1, 2.2) des Mobilfunknetzes (CN) durchführt und
- wobei eine Verbindung mit der Mobilfunkzelle (2.1), die als Nächstes auf die aktuell verbundene Mobilfunkzelle (1.2) auf der Fortbewegungsroute (TR) des Fahrzeugs (V) folgt, unabhängig von jeglichen Handover-Regeln des Mobilfunknetzes (CN) hergestellt wird, falls die Mobilfunkzelle (2.1), die auf der berechneten Fortbewegungsroute (TR) auf die aktuell verbundene Mobilfunkzelle (1.2) folgt, zu einer anderen Teilmenge (S2) der Mobilfunkzellen (1.1, 1.2, 2.1, 2.2) gehört als die aktuell verbundene Zelle (1.2), dann wird die Herstellung der Verbindung des Navigationssystems (NS) mit der folgenden Mobilfunkzelle (2.1) initiiert, wenn das Fahrzeug durch in eine Übergangszone (TR) eintritt, die geografisch definiert ist.

2. Verfahren nach Anspruch 1, **dadurch gekennzeichnet, dass** die Datenbank für jede Mobilfunkzelle (1.1, 1.2, 2.1, 2.2) des Mobilfunknetzes (CN) als Informationen
- einen MNC [Mobile Network Code] oder einen MCC [Mobile Country Code] und
- Daten, ob ein Network Slicing oder Federated Network Slicing verfügbar ist, und
- Daten, ob GNSS-Korrekturdaten verschlüsselt verfügbar sind,
enthält.

3. Verfahren nach Anspruch 1, **dadurch gekennzeichnet, dass** die Übergangszone (TR) und eine Grenzlinie (BR) der Übergangszone (TR) durch den Navigationsprozess auf der Grundlage mindestens eines Parameters des Navigationsprozesses und auf der Grundlage einer berechneten Zeit, die voraussichtlich verbleibt, bis die Verbindung mit der aktuell verbundenen Mobilfunkzelle (1.2) abbricht, definiert werden.

## Revendications

1. Procédé pour faire fonctionner un système de navigation (NS) d'un véhicule (V) dans un réseau cellulaire (CN), où le système de navigation (NS) comprend un module de navigation (NM) adapté pour recevoir des données GNSS depuis des satellites et un module radio mobile (MRM) adapté pour recevoir des données de correction GNSS depuis des stations au sol dans un réseau cellulaire,
- où le système de navigation (NS) reçoit des données de correction GNSS par l'intermédiaire du réseau cellulaire (CN),
- où les données de correction GNSS sont transmises dans un premier sous-ensemble (S1) de cellules cellulaires (1.1, 1.2) du réseau cellulaire (CN) selon un premier procédé de routage dans une tranche de réseau sous la forme de données non cryptées en utilisant la diffusion, et où les données de correction GNSS sont transmises dans un second sous-ensemble (S2) de cellules cellulaires (2.1, 2.2) du réseau cellulaire (CN) selon un second procédé de routage sous la forme de données cryptées en utilisant la monodiffusion,
le procédé étant **caractérisé** :
- **en ce que** le système de navigation (NS) du véhicule (V) a accès à une base de données qui contient des informations concernant les propriétés des cellules cellulaires (1.1, 1.2, 2.1, 2.2) du réseau cellulaire (CN), lesdites informations étant liées à un paysage de manière à ce que le système de navigation (NS) soit capable de calculer quelle cellule cellulaire (1.1, 2.1, 2.1, 2.2) sera entrée ensuite pendant le déplacement sur un itinéraire de déplacement donné (TR) ;
- où le système de navigation (NS) effectue une comparaison entre un itinéraire de déplacement (TR) calculé du véhicule (V) et les informations concernant les propriétés des cellules cellulaires (1.1, 1.2, 2.1, 2.2) du réseau cellulaire (CN) et ;
- où une connexion à la cellule cellulaire (2.1) qui suit la cellule cellulaire (1.2) actuellement connectée sur l'itinéraire de déplacement (TR) du véhicule (V) est établie indépendamment de toute règle de transfert du réseau cellulaire (CN) si la cellule cellulaire (2.1) qui suit, sur l'itinéraire de déplacement (TR) calculé, la cellule cellulaire actuellement connectée (1.2) appartient à un autre sous-ensemble (S2) des cellules cellulaires (1.1, 1.2, 2.1, 2.2) que la cellule actuellement connectée (1.2), alors l'établissement de la connexion du système de navigation (NS) à la cellule cellulaire suivante (2.1) est étant initié lorsque le véhicule par entre dans une zone de transition (TR) qui est géographiquement définie.

2. Procédé selon la revendication 1, **caractérisé en ce que** la base de données contient comme informations pour chaque cellule cellulaire (1.1, 1.2, 2.1, 2.2) du réseau cellulaire (CN) :
- un MNC (code de réseau mobile) ou un MCC (code de pays mobile) et,
- des données indiquant si un découpage de réseau ou un découpage de réseau fédéré est disponible, et
- des données indiquant si les données de correction GNSS sont cryptées.

3. Procédé selon la revendication 1, **caractérisé en ce que** la zone de transition (TR) et une limite (BR) de la zone de transition (TR) sont définies par le processus de navigation sur la base d'au moins un paramètre du processus de navigation et sur la base d'un temps calculé présumé restant jusqu'à ce que la connexion à la cellule cellulaire actuellement connectée (1.2) soit perdue.
